# EUROPEAN PATENT APPLICATION

(11) **EP 1 503 314 A2**
(43) Date of publication of application: **02.02.2005**
(21) Application number: 04015903.0
(22) Date of filing: 06.07.2004
(51) Int. Cl.: G06F 17/60

(54) **System, method and program for the collection of information on an article or commodity selected by a customer**

(30) Priority: 07.07.2003 JP 2003192790
(71) Applicant: Fuji Photo Film Co., Ltd., Kanagawa (JP)
(72) Inventor: Kinjo, Naoto, c/o Fuji Photo Film Co., Ltd., Ashigara-kami-gun, Kanagawa (JP)
(74) Representative: Klunker . Schmitt-Nilson . Hirsch

(57) **Abstract**

The information collection system and method detect a customer and an article selected by the customer from among multiple articles, acquire, in a management unit, first identification information on the customer and second identification information on the article, relate the second identification information to the first identification information, collect customer information on the customer and article information on the article from a database based on the first and second identification information and output the article information in a predetermined form in relation to the customer information.

## Description

### BACKGROUND OF THE INVENTION

The present invention relates to an information collection system, an information collection method and a program with which article information on an article selected by a customer from among multiple articles is collected and provided to the customer. More particularly, the invention relates to an information collection system, an information collection method and a program with which commodity information on a commodity picked up by a customer during the shopping in a store is collected and provided to the customer, and information on a favorite exhibit such as a picture during the visit to a museum is provided.

Conventionally, JP 2001-175761 A discloses providing information services or advertisements by way of a portable terminal or the Internet with a view to promoting sales of commodities and services, forming and improving brand values, improving customer services, and capturing customers' hearts, in the manufacturing or selling business of commodities whose constant or continuous purchase is expected, as exemplified by beverages, cigarettes, sweets, delicatessen, packed lunch, fast foods, housewares such as shampoo and soap as well as commodities such as cosmetics and perfumes of which the customers' tastes are reflected in the selection.

JP 2001-175761 A discloses that a business operator determines the degree of interest of a customer in accessing commodity information or an advertisement on a server or a database, based on the customer's purchase history and history of access to the information and advertisement, and provides the customer with the commodity information and the advertisement in accordance with the degree of the customer's interest.

According to the invention disclosed in JP 2001-175761 A, access to the server or database is made by using an information terminal owned by a customer such as a telephone set, a cell phone, a portable telephone terminal capable of displaying, reproducing and transmitting/receiving data, or a computer connected to a communication network.

JP 10-269287 A discloses a commodity management data collection system wherein information on a commodity in which a customer had in a supermarket or a department store - is collected even in the case where the customer did not finally purchased it.

According to the invention disclosed in JP 10-269287 A, each commodity is equipped with an ID tag for holding a memory including commodity identification information. When a customer visits a store, a compact terminal for collecting data is offered to the customer. The compact terminal is equipped with a reader/writer for a tag which performs data communication with the ID tag. When the customer carrying the compact terminal picks up a commodity, the commodity identification information in the ID tag is loaded into the compact terminal. In this way, it is possible to collect the data on a commodity in which the customer has interest. Further, the commodity management data collection system disclosed in JP 10-269287 A can display commodity advertisement information on the commodity picked up by the customer.

The invention disclosed in JP 2001-175761 A evaluates the degree of interest of a customer based on his/her purchase history. In this evaluation, it is difficult to estimate the potential degree of interest of a customer in a new product or a product in a new field. Further, it is impossible to measure the degree of a customer's interest in a commodity the customer did not finally purchase although he/she had interest therein.

Moreover, it is necessary to operate an information terminal such as a personal computer to access commodity information on a new product or an advertisement of the product, which involves a cumbersome work. Thus the invention according to JP 2001-175761 A is not suited for measuring the degree of interest of a person who is not good at operating an information terminal and fails to measure the degree of interest of a person who does not own an information terminal.

The invention disclosed in JP 10-269287 A allows a customer to obtain commodity advertisement information on a commodity although the commodity advertisement information is intended to promote the motivation for purchase and is not always needed by a customer.

### SUMMARY OF THE INVENTION

The invention has been accomplished in view of the aforementioned problems and a first object is to provide an information collection system with which information can be automatically collected on an article in which a customer had interest, for example, during the shopping in a store or visit to a museum.

A second object of the present invention is to provide an information collection method which is used in the information collection system.

A third object of the present invention is to provide a program for executing the information collection method.

In order to attain the first object described above, a first aspect of the present invention provides an information collection system comprising: detection means for detecting first identification information on a customer who has selected an article from among multiple articles, and second identification information on the article selected by the customer; a database for storing customer information on the customer and article information on the multiple articles; a management unit for managing the second identification information on the selected article as detected by the detection means in relation to the first identification information on the customer who has selected the article, and collecting the article information on the selected article and the customer information from the database by using the second identification information on the article and the first identification information on the customer; and an edit processing output section for receiving the article information and the customer information from the management unit, editing the article information on the selected article, and outputting the article information on the selected article in a predetermined form in relation to the customer information.

It is preferable that the detection means comprises a first IC tag which is owned by the customer and stores the first identification information on the customer, second IC tags which are individually attached to the multiple articles and onto which the second identification information on each of the multiple articles is recorded, and IC tag sensors for reading the first and second IC tags.

It is also preferable that the information collection system further comprises a portable communication terminal having an image display, wherein the article information provided on the selected article is output to the portable communication terminal by the edit processing output section and displayed on the image display.

In order to attain the second object described above, a second aspect of the present invention provides an information collection method comprising: a step of detecting a customer and an article selected by the customer from among multiple articles; a step of acquiring first identification information on the detected customer and second identification information on the selected article; a step of relating the second identification information on the selected article to the first identification information on the customer who has selected the article; a step of collecting customer information on the customer and article information on the selected article based on the first identification information on the customer who has selected the article and the second identification information on the selected article; and a step of outputting the article information on the selected article in a predetermined form in relation to the customer information.

It is preferable that the first identification information on the customer is detected by reading a first IC tag which is owned by the customer and stores the first identification information on the customer, by means of IC tag sensors, and the second identification information on the selected article is detected by reading second IC tags which are individually attached to the multiple articles and onto which the second identification information on each of the multiple articles is recorded, by means of the IC tag sensors.

It is also preferable that the article information provided on the selected article is output to a portable communication terminal having an image display by the edit processing output section and displayed on the image display.

In order to attain the third object described above, a third aspect of the present invention provides a program for executing an information collection method which comprises: a step of detecting a customer and an article selected by the customer from among multiple articles; a step of acquiring, in a management unit, first identification information on the detected customer and second identification information on the selected article; a step of relating, in the management unit, the second identification information on the selected article to the first identification information on the customer who has selected the article; a step of collecting, in the management unit, customer information on the customer and article information on the selected article from a database based on the first identification information on the customer who has selected the article and the second identification information on the selected article; and a step of outputting the article information on the selected article in a predetermined form in relation to the customer information.

It is preferable that the first identification information on the customer is detected by reading a first IC tag which is owned by the customer and stores the first identification information on the customer, by means of IC tag sensors, and the second identification information on the selected article is detected by reading second IC tags which are individually attached to the multiple articles and onto which the second identification information on each of the multiple articles is recorded, by means of the IC tag sensors.

It is also preferable that the article information provided on the selected article is output to a portable communication terminal having an image display by the edit processing output section and displayed on the image display.

This application claims priority on Japanese patent application No. 2003-192790, the entire contents of which are hereby incorporated by reference.

### BRIEF DESCRIPTION OF THE DRAWINGS

Fig. 1 is a schematic view of an information collection system according to an embodiment of the invention; and
Fig. 2 is a schematic view showing the details of part of the information collection system shown in Fig. 1.

### DETAILED DESCRIPTION OF THE INVENTION

An information collection system, an information collection method and a program according to the invention will be described below in detail with reference to an embodiment shown in the attached drawings.

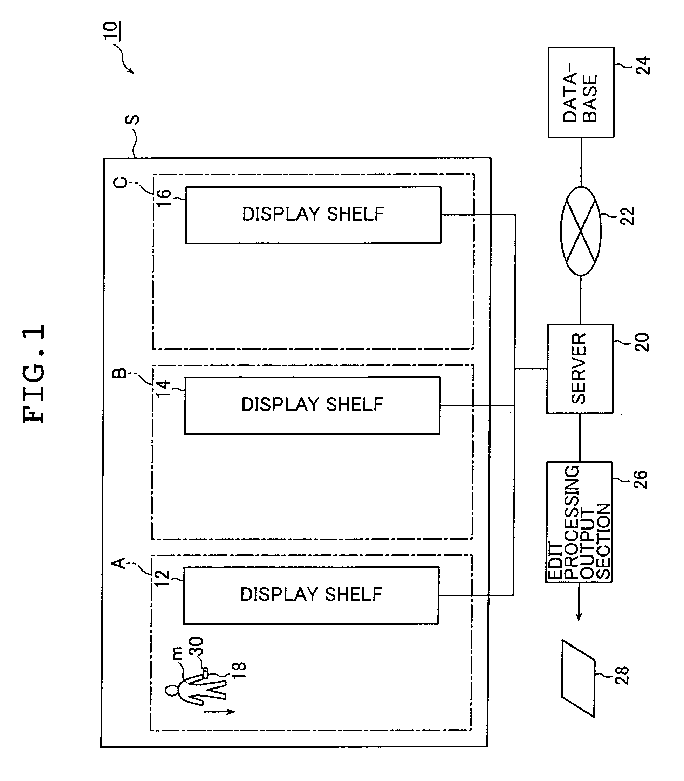

Fig. 1 is a schematic view of an information collection system according to an embodiment of the invention. The information collection system according to the embodiment will be described below taking as a example a case where, when a customer m visits a store for shopping and picks up commodities arranged on display shelves 12,14,16 installed in the store, the commodities are identified and their related information is provided to the customer m.

As shown in Fig. 1, an information collection system 10 comprises a server 20, a database 24 connected to the server 20 via a communication network 22, an edit processing output section 26, a portable communication terminal 18 carried by a customer m, and detection means for detecting the customer m and a commodity picked up by the customer m.

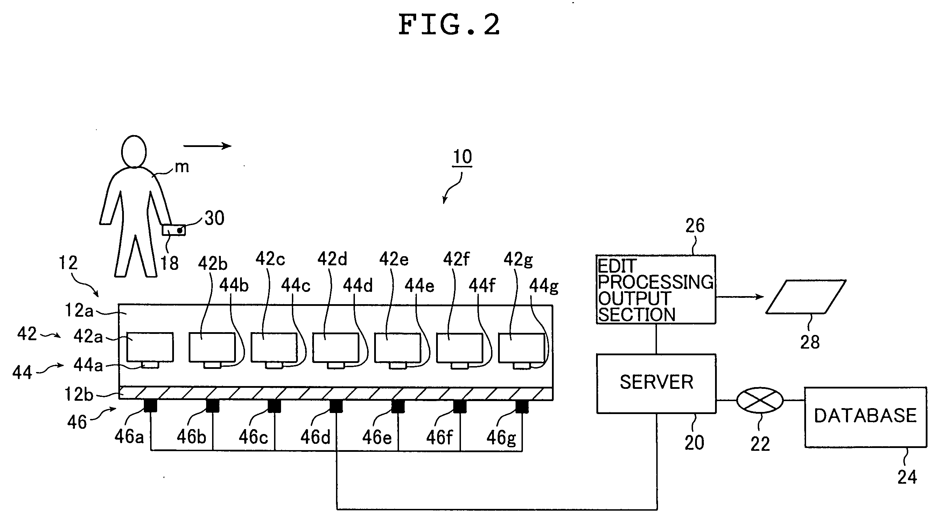

In the display shelves 12,14,16 are arranged commodities (not shown) such as books, CDs and DVDs. Fig. 2 is a schematic view showing the details of part of the information collection system 10 according to this embodiment. The display shelf 12 shown in Fig. 2 is arranged in the area A of a store S. In this embodiment, the display shelves 12,14,16 have the same structure. Thus the display shelf 12 will be described below as a representative example and the remaining display shelves 14,16 will not be described.

The display shelf 12 comprises a shelf board 12a and a backboard 12b. The shelf board 12a is attached to the backboard 12b. On the backboard 12b are provided IC tag sensors 46 (46a - 46g), which are respectively connected to the server 20. Commodities 42 (42a - 42g) displayed on the shelf board 12a are respectively provided with IC tags (second IC tags) 44 (44a - 44g). In each of these IC tags 44a - 44g is recorded identification information (hereinafter referred to as a commodity ID) on each of the commodities 42a - 42g.

The portable communication terminal 18 carried by the customer m is provided with an IC tag (first IC tag) 30 in which is stored identification information on the customer m (hereinafter referred to as a customer ID). The customer ID stored in the IC tag 30 is used to identify the customer m. The IC tag 30 may be provided elsewhere than the portable communication terminal 18. The IC tag 30 may be provided for example on a bag or an accessory, or held by the customer m by the hand.

The detection means comprises the IC tag 30, the IC tags 44a - 44g and the IC tag sensors 46a - 46g.

In the detection means, each of the IC tag sensors 46a - 46g reads corresponding one of the IC tags 44a - 44g on the respective commodities 42a - 42g at predetermined time intervals. Information on the positions and the commodity IDs of the commodities 42a - 42g are output to the server 20 for use in detecting the commodities 42a - 42g.

When the customer m picks up the commodity 42a (or selects the commodity 42a) for example, the IC tag sensor 46a detects the change in the position of the commodity 42a and at the same time, reads the TC tag 30 of the customer m. In this case, the commodity ID of the commodity 42a picked up and the customer ID of the customer m are simultaneously acquired by the detection means. In this way, the server 20 can acquire the commodity ID of the commodity 42a picked up and the customer ID of the customer m who has picked up the commodity 42a.

In the case where the IC tag 44a of the commodity 42a is read with some of the IC tag sensors 46a - 46g, a judgment that the customer m picked up the commodity 42a may be made when any one of the IC tag sensors used for reading cannot read the IC tag 44a. One of the IC tag sensors 46a - 46g may be used to read the IC tag 30 of the customer m. In this way, it is possible to acquire the commodity ID of a commodity picked up by the customer m and the customer ID of the customer m who has picked up the commodity.

The results of reading of the IC tags 30, 44a - 44g by the detection means are output to the server 20, which acquires and manages the detection results.

The portable communication terminal 18 is for example a cell phone or a PDA (Personal Digital Assistant). The portable communication terminal 18 is equipped with the IC tag 30 where the customer ID of the customer m is recorded. In the IC tag 30 is stored the pre-registered customer ID of the customer m.

The portable communication terminal 18 is preferably provided with an image display. This allows the commodity information of the commodity picked up by the customer m to be displayed on the portable communication terminal 18.

The server 20 is connected to the IC tag sensors 46 provided on the display shelves 12,14,16. The server 20 is connected to the database 24 via the communication network 22 and is also connected to the edit processing output section 26.

If the IC tag 44a is detected, the server 20 records the commodity ID of the commodity 42a picked up by the customer m in relation to the customer ID of the customer m based on the detection result of the IC tag 30 and the detection result of the position of the IC tag 44a as acquired by the IC tag sensor 46a. That is, the information on the commodity 42a picked up by the customer m is stored and managed in the server 20 in relation to the customer m.

Further, the server 20 collects customer information on the customer m and commodity information on the commodity selected by the customer m from the database 24, based on the customer ID of the customer and the commodity ID of the commodity as detected by the detection means and outputs the collected customer information and commodity information to the edit processing output section 26, which will be mentioned later.

The database 24 accumulates the customer information on the customer m and the commodity information on the commodities arranged on the display shelves 12,14,16. The customer information includes the name, age, occupation, sex, address, telephone number, e-mail address and hobbies of the customer. The customer information on the customer m is previously input by the customer m. A customer ID is assigned to the customer information.

The commodity information includes a manufacturer, date of manufacture and specifications such as a size, functions, and a price. A commodity ID is assigned to the commodity information. The commodity information further includes access links to an advertisement of the commodity, related commodities and detailed information on the commodity.

The database 24 is not limited to one connected via the communication network 22 but may be one directly connected to the server 20 or provided in the server 20.

A database from a manufacturer of the commodity of interest may be used for the database 24. Different databases may be used for the respective commodities, or the customer information and the commodity information may be stored in different databases.

The edit processing output section 26 comprises an edit subsection (not shown) for editing the commodity information on a commodity picked up by the customer m and the customer information on the customer m having been collected by the server 20 and an output subsection (not shown) for outputting the commodity information of the commodity picked up by the customer m in relation to the customer information in a predetermined form in which the information is provided to the customer m.

Examples of the form used to provide information to the customer m include paper media such as a newspaper, a catalog, a pamphlet, a brochure, a printed receipt, a mail, and a picture postcard, recording media such as a DVD and a CD-R, and communication means such as a facsimile and means of data delivery via a network.

The output subsection includes printing means such as a printer when information is provided to the customer m in the form of a paper medium, means for writing to each recording medium when information is provided in the form of a recording medium, and communication equipment such as a modem when information is provided in the form of communication means. The output subsection outputs information to the portable communication terminal 18 of the customer m.

As another form used in providing information to the customer m, a website of a store S may be set up and commodity information on a commodity may be put on the website in accordance with the customer ID of the customer m.

In this embodiment, the commodity information of the commodity selected by the customer m is put together into a pamphlet 28 for example by the edit processing output section 26 and handed over to the customer m for example at the exit of a store.

The edit processing output section 26 may change the data volume or the edit pattern such as layout in accordance with the form applied to provide the commodity information on the commodity of interest to the customer m.

The information collection method employed by the information collection system 10 according to this embodiment will be described below by reference to Fig. 2. The program according to the present invention is a program for executing the information collection method to be described later in detail.

In this embodiment, a case where commodities 42a - 42g displayed on the shelf board 12a of the display shelf 12 are selected by the customer m will now be described as a typical example. In this case, the form applied to provide information to the customer m is a pamphlet 28 as mentioned above.

In this embodiment, when the customer m picks up the commodity 42a for example, a change in the position of the commodity 42a is detected by the IC tag sensor 46a. At the same time, the customer ID of the customer m who has picked up the commodity 42a is read. In this way, the IC tag sensor 46a detects that the customer m has picked up the commodity 42a. The information is output from the detection means to the server 20, which acquires the customer ID of the customer m and the commodity ID of the commodity 42a. The server 20 then stores the customer ID of the customer m in relation to the commodity ID of the commodity 42a.

Next, the server 20 searches the database 24 based on the customer ID and the commodity ID and collects the commodity information on the commodity 42a in relation to the customer information. In case the customer m has picked up another commodity 42d, the fact that the customer m has picked up the commodity 42d is stored into the server 20 together with the customer ID of the customer m. The server 20 searches the database 24 and collects the commodity information on the commodity 42d in relation to the customer information.

In this way, the commodity information on all the commodities picked up by the customer m is collected in the server 20 together with the customer information. The commodity information on all the commodities picked up by the customer m is edited in relation to the customer information in the edit processing output section 26 and the resulting information is output as a pamphlet 28. The pamphlet 28 is handed over to the customer m for example at the time of payment. The commodity information on the commodity picked up by the customer m is thus provided to the customer m.

The form in which commodity information on commodities is provided is not particularly limited. As mentioned above, the customer m can previously select a desired in the store from among the paper medium, recording medium and communication means.

The timing at which commodity information on commodities is provided is not particularly limited either. The information may be provided in real time or at the time of payment or when the customer leaves the store. The customer m may also select the timing at which the information is provided by previously specifying in the store.

It is assumed here that the customer m visited the store S with a companion having identification information (ID), and the customer m and the companion were recognized to belong to the same group based on the identification information (ID) of the companion. In the embodiment, when the customer m and his/her companion picked up the same commodity, the commodity information on the commodity in one of the customer m and the companion is deleted. This avoids overlapping of the commodity information of the commodity. When the customer m visits the store S with a companion or his/her family, the information may be provided to one of the visiting members.

While the customer ID of the customer m and the commodity picked up by the customer m are identified by the server 20 in this embodiment, the invention is not limited thereto. For example, the portable communication terminal 18 may have a capability of reading an IC tag provided on a commodity. In this case, the commodity ID of the commodity read by the portable communication terminal 18 is stored in the portable communication terminal 18. Then the commodity ID of the commodity collected by the portable communication terminal 18 is output to the server 20 together with the customer ID. The server 20 collects the commodity information of the commodity from the database 24 based on the commodity ID and the customer ID. The customer ID and the commodity ID may be edited in the edit processing output section 26 and provided to the customer m in a predetermined information form.

Thus, in this embodiment, it is possible to automatically detect the commodity picked up by the customer m, collect the commodity information on the commodity and the customer information, and provide the resulting information to the customer m in a predetermined form. The customer m can obtain the commodity information on the commodities in which he/she has interest, including ones which he/she did not purchase. The customer m can easily obtain information on a commodity of which he/she considers the purchase, which allows the customer to consider the purchase at home. The store S can advertise the commodity as well as check the degree of interest of the customer m in the commodity the customer m did not purchase.

In this embodiment, a commodity picked up by the customer m may be detected through human body communication.

The phrase "human body communication" refers to data communication by passing a faint electric signal through the human body used as a conductor. A human body communication system comprises an information terminal storing data such as personal information and a communication section for performing data transmission/reception. With the human body communication, a person who carries an information terminal can transmit/receive information by shaking hands. In case the target object is provided with an information terminal, the person can transmit/receive information by touching the object with his/her finger.

In this embodiment, the portable communication terminal corresponds to the above-mentioned information terminal. In this case, when a customer touches the commodity, the commodity ID of the commodity is recorded to the portable communication terminal from an IC tag. It is assumed that the customer ID has been already identified.

In the embodiment, in place of the human body communication, a touch panel may be provided on the display shelf for each commodity so that a touch on the touch panel may cause recording to the portable communication terminal.

The commodity IDs of the commodities thus collected are sequentially or collectively output to the server 20. When the commodity IDs are collectively output to the server 20, the output method is not particularly limited. That is, the IDs may be output to the server 20 at the time of payment, when the customer leaves the store, or via a network after the customer has left the store.

The customer m may use a portable communication terminal to allow the name of a commodity in which he/she has interest to be read aloud and recorded as a voice signal, which may be output to the server 20 for example as a voice mail so that the customer m will receive the commodity information of the commodity in which he/she has interest.

In the embodiment, the degree of interest of a shopper on the day he/she visited the store may be estimated and the detail level of the commodity information on the commodity to be provided may be changed in accordance with the degree of interest. That is, the commodity information amount of the commodity to be provided to the customer m is adjusted.

The degree of interest may be estimated based on the length of time period during which the customer m picks up a commodity and returns it, or the time period during which the customer m is located in the area where the display shelf having particular commodities is arranged.

The length of time period during which the customer m picks up a commodity and returns it, can be measured by detecting the position of the commodity by way of an IC tag sensor, or based on the time when one of the IC tag sensors used for reading cannot read the IC tag.

As for the time period during which the customer m is located in the area where the display shelf having particular commodities is arranged, the degree of interest of the customer m can be measured by dividing the store S into three areas A, B and C, for example, providing gates having IC tag sensors at the entrances/exits of the areas A, B and C, reading the IC tag 30 of the customer m, and recording the time period during which the customer m is located in each of the areas A, B and C, or the number of visits to each of the areas A, B and C.

The invention is not limited to the degree of interest of the customer m on the day he/she visited the store. The degree of the customer m's interest may be estimated referring to the purchase history of the customer m.

It is also possible to estimate the tastes of the customer m from the estimated degree of interest of a shopper and provide the commodity information on a commodity which seems to suit the tastes of the customer m although it has not been picked up by the customer m. In particular, the information on a new commodity or a prototype which seems to suit the tastes of the customer m is preferably provided. For example, when the customer m is regarded as having interest in red clothes, the customer m is provided with an advertisement of red clothes or a red handbag the customer m did not picked up.

Moreover, it is possible to grasp the degree of interest in a commodity, including the case where the customer m did not finally purchase the commodity, by quantifying the degree of interest of a shopper and creating statistical analysis data. This can reflect the analysis data in the commodity design, commodity stocking, or commodity exhibiting method. Or, the analysis data itself may be treated as a commodity.

While the information collection system is applied to a store in the embodiment under consideration, the invention is not limited thereto. For example, a touch panel may be provided on the exhibit case of each exhibit in a museum so that the identification information (ID) of a visitor can be recognized by way of a portable communication terminal, as in the embodiment described above, and that the information on an exhibit in which the visitor is interested can be provided in the form desired by the visitor.

The invention is not solely applicable to a store and a museum. As in the embodiment described above, it is possible to acquire in a desired form article information on an article in which a customer is interested, in such places as a department store, a zoo, an aquarium, a botanical garden, a movie theater, a variety of theme parks, a variety of memorial halls, a historical site or spot, a sightseeing spot, and an event site.

An article in the application of the invention refers to a target of appreciation and includes both a tangible and an intangible. In this case, examples of the tangible include scenery, a person, a living organism, and an artificial or natural structure. Examples of the intangible include a movie, music, a play and an event.

Article information in the application of the invention includes the descriptive information such as the name, characteristics, and structure of the above article as well as its history (or career of a person), an advertisement, introduction of related articles, and an access link of detailed information.

An application example of the information collection system of the invention will be described below. A case where the information collection system of the invention is applied to an amusement facility such as a theme park (hereinafter referred to as a first application example) will be described.

In this application example, as mentioned above, an IC tag is provided on the portable communication terminal. At the entrance of each theme building or theme area in the theme park is provided a gate which serves as a communication point. Data communication can be performed with the IC tag of the portable communication terminal carried by the customer m by way of a communication section provided in the gate.

A customer carrying his/her portable communication terminal enters a theme park and travels inside the park. When the customer holds the portable communication terminal to the gate provided at the entrance of each theme building or theme area in the theme park as he/she passes through the gate, gate-related information is transferred to the IC tag of the portable communication terminal from the communication section of the gate. The gate-related information includes gate identification information and date/time data.

The gate identification information reveals on which path the customer has traveled in the theme park. A printout service of the travel path and the passage time on a general map of the theme park is available. In this way, it is possible to detect and record the travel path of a customer in the theme park.

In the first application example, the travel path of the customer m is detected so that it is possible to automatically collect information related to the events in the theme buildings or the theme areas the customer m visited, and information related to the theme buildings or theme areas, and provide the information to the customer m. The information may be provided to the customer m in the same form as in the above embodiment so that the detailed description will be omitted.

In this case, the related information includes explanation of each theme building, a picture of the customer, and a picture shot by the customer. The place where the information is provided is for example a restaurant. For example, a customer is recognized on his/her visit to the restaurant, and the related information is created while the customer is ordering dishes. The related information is provided in the form desired by the customer as in the above embodiment. The place where the information is provided is not particularly limited.

Also in the first application example, it is possible to estimate the degree of interest of the customer in accordance with the length of the time period during which the customer is in a specific theme building.

The information collection system of the embodiment can be applied to print ordering in a movie theater or elsewhere (hereinafter referred to as a second application example).

In this case, when the customer is watching a movie, video or a TV program, it is possible to output images of scenes selected by the customer as prints, a photograph collection or a short movie collection, or output them as a predetermined recording medium on which the image data is recorded, or deliver the image data over a network to provide it to the customer as a movie appreciation memorial image.

For example, a pamphlet including images of scenes selected by the customer together with their corresponding explanation is prepared. The pamphlet is provided when the customer leaves the movie theater. The pamphlet may give rise to an animated conversation on the movie.

In case the customer has a companion in the second application example, the identification information (ID) of the companion may be registered so that one of the duplicate scenes specified will be deleted or a single pamphlet for the customer and his/her companion will be provided. The name of a person who has specified the scenes may be recorded.

Also in this application example, it is possible to estimate the degree of interest of the customer in accordance with the frequency of specification based on a specific movie scene classification. The scene classification may be made on the basis of the actor, or an action scene, a love scene, or a car chase scene.

While the customer information and commodity information are stored into a database in each of the embodiment and application examples described above, this is not the sole case of the invention. For example, the customer ID and customer information of a customer may be stored into an IC tag held by the customer and the commodity ID and commodity information of a commodity may be stored into an IC tag attached to the commodity, thereby eliminating the need for a database.

As detailed hereinabove, an information collection system and an information collection method according to the invention automatically collect information on an article in which a customer had interest during the shopping in a store or visit to a museum, for example.

## Claims

1. An information collection system comprising:
detection means for detecting first identification information on a customer who has selected an article from among multiple articles, and second identification information on said article selected by said customer;
a database for storing customer information on said customer and article information on said multiple articles;
a management unit for managing said second identification information on said selected article as detected by said detection means in relation to said first identification information on said customer who has selected said article, and collecting said article information on said selected article and said customer information from said database by using said second identification information on said article and said first identification information on said customer; and
an edit processing output section for receiving said article information and said customer information from said management unit, editing said article information on said selected article, and outputting said article information on said selected article in a predetermined form in relation to said customer information.

2. The information collection system according to claim 1, wherein said detection means comprises a first IC tag which is owned by said customer and stores said first identification information on said customer, second IC tags which are individually attached to said multiple articles and onto which said second identification information on each of said multiple articles is recorded, and IC tag sensors for reading said first and second IC tags.

3. The information collection system according to claim 1 or 2, further comprising a portable communication terminal having an image display, wherein said article information provided on said selected article is output to said portable communication terminal by said edit processing output section and displayed on said image display.

4. An information collection method comprising:
a step of detecting a customer and an article selected by said customer from among multiple articles;
a step of acquiring first identification information on said detected customer and second identification information on said selected article;
a step of relating said second identification information on said selected article to said first identification information on said customer who has selected said article;
a step of collecting customer information on said customer and article information on said selected article based on said first identification information on said customer who has selected said article and said second identification information on said selected article; and
a step of outputting said article information on said selected article in a predetermined form in relation to said customer information.

5. The information collection method according to claim 4, wherein said first identification information on said customer is detected by reading a first IC tag which is owned by said customer and stores said first identification information on said customer, by means of IC tag sensors, and said second identification information on said selected article is detected by reading second IC tags which are individually attached to said multiple articles and onto which said second identification information on each of said multiple articles is recorded, by means of said IC tag sensors.

6. The information collection method according to claim 4 or 5, wherein said article information provided on said selected article is output to a portable communication terminal having an image display by said edit processing output section and displayed on said image display.

7. A program for executing an information collection method which comprises:
a step of detecting a customer and an article selected by said customer from among multiple articles;
a step of acquiring, in a management unit, first identification information on said detected customer and second identification information on said selected article;
a step of relating, in said management unit, said second identification information on said selected article to said first identification information on said customer who has selected said article;
a step of collecting, in said management unit, customer information on said customer and article information on said selected article from a database based on said first identification information on said customer who has selected said article and said second identification information on said selected article; and
a step of outputting said article information on said selected article in a predetermined form in relation to said customer information.

8. The program according to claim 7, wherein said first identification information on said customer is detected by reading a first IC tag which is owned by said customer and stores said first identification information on said customer, by means of IC tag sensors, and said second identification information on said selected article is detected by reading second IC tags which are individually attached to said multiple articles and onto which said second identification information on each of said multiple articles is recorded, by means of said IC tag sensors.

9. The program according to claim 7 or 8, wherein said article information provided on said selected article is output to a portable communication terminal having an image display by said edit processing output section and displayed on said image display.
